Europäisches Patentamt

European Patent Office

Office européen des brevets

(11) Publication number: **0 402 010**
**A2**

# EUROPEAN PATENT APPLICATION

(21) Application number: 90305671.1

(22) Date of filing: 24.05.90

(51) Int. Cl.⁵: **C03B 37/15, G02B 6/28**

(30) Priority: 05.06.89 US 361385
05.06.89 US 361383

(43) Date of publication of application:
**12.12.90 Bulletin 90/50**

(84) Designated Contracting States:
**AT BE CH DE ES FR GB IT LI NL SE**

(71) Applicant: **CORNING INCORPORATED**
**Houghton Park**
**Corning New York 14831(US)**

(72) Inventor: **Berkey, George Edward**
**R.D. No. 2 Riley Hill Road**
**Pine City, New York 14871(US)**
Inventor: **Hawk, Robert Martin**
**27 Robie Street**
**Bath, New York 14810(US)**

(74) Representative: **Boon, Graham Anthony et al**
**Elkington and Fife Beacon House 113**
**Kingsway**
**London, WC2B 6PP(GB)**

(54) Polarization retaining fiber optic coupler and method.

(57) This invention relates to a method of drawing twist-free optical fibers; it is particularly useful for drawing polarization retaining single-mode (PRSM) optical fibers having azimuthal inhomogeneities. In one embodiment, there is applied to the fiber (57), during the drawing thereof, a coating (58) having a non-circular cross-section, the azimuthal inhomogeneity of the fiber being positioned in a substantially constant orientation with respect to the non-circular cross-section of the coating. In another embodiment, a plurality of fibers (76,77) having azimuthal inhomogeneities are drawn through the same coater so that the azimuthal inhomogeneity of each fiber is oriented in a substantially constant relation with respect to the azimuthal inhomogeneities of the remaining fibers in the coating. The coated PRSM fibers are particularly useful for making polarization retaining fiber optic couplers.

Fig. 7

EP 0 402 010 A2

The present invention relates generally to the field of polarization retaining optical fiber couplers and more particularly to methods of making such couplers as well as making optical fibers for such couplers.

It has been known that coupling occurs between two closely spaced cores in a multiple core device. The coupling efficiency increases with decreasing core separation and, in the case of single-mode cores, with decreasing core diameter. Fiber optic couplers employed in systems such as fiber optic gyroscopes must be capable of preserving the polarization of optical signals propagated therethrough. Such couplers are preferably made from single-mode fibers which are capable of preserving the polarization of signals along two different, usually orthogonal axes. Polarization retaining single-mode (PRSM) fiber optic couplers are disclosed in U.S. Patents Nos. 4,589,725 and 4,755,021 issued to R. B. Dyott and U.S. Patent No. 4,753,497 issued to Y. Fujii et al. The couplers taught in these patents comprise PRSM fibers of the type wherein the core is surrounded by an elliptically-shaped cladding layer which imparts a stress to the core.

U.S. Patent No. 4,755,021 teaches that a PRSM fiber having two intersecting flat surfaces can be drawn from a similarly shaped preform. The preform can be made by first forming a cylindrical preform with an elliptical core and cladding located in the center thereof and then grinding two adjacent sides of the preform to form a cross-section having one flat surface parallel to the major axis of the elliptical core and another flat surface parallel to the minor axis of the elliptical core. Two or more of the fibers produced from such a preform can be etched along those portions of their lengths where it is desired to couple the fields of the two fibers. The etched fibers are fed, with their flat sides facing each other, through a glass tube which is then heated until the central region thereof collapses onto the fibers. The etching and the subsequent handling of the etched fibers is a tedious process. Moreover, the cross-sectional shape of these fibers makes it difficult to connect them to conventional single-mode fibers having axial cores.

In U.S. Patent No. 4,753,497 a circular PRSM fiber is bonded in a channel with the major axis of the elliptical cladding either perpendicular to or parallel to the channel surface. The substrate in which the channel is located and the PRSM fiber embedded therein are then abraided away to a depth sufficient to permit light traveling in the core to escape from the fiber. To form a coupler, two similarly formed substrates are combined with index matching fluid interposed therebetween. Connection of the coupler fibers to the other system fibers is facilitated by the use of circular PRSM fibers. However, to ensure proper functioning of such a coupler, the technician forming the coupler must know the orientation of the major axes of the PRSM fibers so that they can be positioned in suitable alignment. It is sometimes extremely difficult to determine the relative orientation of a circular PRSM fiber from a transverse observation thereof.

It is therefor an object of the present invention to provide a method of drawing untwisted optical fibers. Another object is to provide a method of forming optical fibers having a coating, a characteristic of which is indicative of an azimuthal orientation of the fiber. Yet another object is to provide a method of sumultaneously drawing a plurality of optical fibers the azimuthal orientations of which are held in proper alignment. A further object is provide a method of facilitating the orientation of polarization retaining single-mode optical fibers during the fabrication of an optical coupler therefrom.

One aspect of the present invention relates to a method of forming an optical fiber cable that is substantially twist-free along the length thereof. The method comprises the steps of providing at least one source of softened thermoplastic material such as glass or plastic from which at least one optical fiber can be drawn. If two or more fibers are simultaneously drawn, they are pulled from a plurality of sources. At least one optical fiber is pulled from the source by passing it through a draw mechanism having opposed, moving surfaces. There is applied to the fiber, between the source and draw mechanism, a coating having at least one surface that is sufficiently flat that the coating cannot twist in the draw mechanism. In one embodiment, there is applied to the fiber a coating having two opposed flat surfaces. The step of applying may comprise applying a plurality of layers of coating material, each subsequently applied layer being applied over the surface of the previous one. One or more of the initially applied coating layers may be round.

The source or sources may comprise softened thermoplastic material from which there can be drawn at least one PRSM fiber having an azimuthal inhomogeneity which is oriented in a substantially constant relationship with respect to the flat surface of the coating.

In an embodiment wherein a plurality of PRSM fibers are simultaneously drawn, each fiber having an azimuthal inhomogeneity, the inhomogeneity of each fiber in the coating is oriented in a substantially constant relationship with respect to the inhomogeneities of the remaining fibers.

Another embodiment relates to a method of drawing an optical fiber comprising the steps of drawing at least one optical fiber having an azimuthal inhomogeneity, and applying to the fiber, during the drawing thereof, a coating having a non-circular cross-section. The azimuthal inhomogeneity of the fiber is positioned in a substantially constant orientation with respect to the noncircular cross-section of the coating. The drawn fiber or fibers may have a circular cross-section. If a plurality of fibers is drawn, the coating is applied such that the azimuthal inhomogeneity of each fiber in the coating is oriented in a substantially constant relationship with respect to the the azimuthal inhomogeneities of the remaining fibers.

Another embodiment relates to a method of drawing an optical fiber comprising the steps of simultaneously drawing a plurality of fibers, each having an azimuthal inhomogeneity. A plurality of such fibers can be drawn by supporting in a predetermined orientation a plurality of optical fiber preforms, each having an azimuthal inhomogeneity, and drawing fibers from the preforms. A coating is applied to the fibers during the drawing thereof. The azimuthal inhomogeneity of each fiber in the coating is oriented in a substantially constant relationship with respect to the the azimuthal inhomogeneities of the remaining fibers. The coating can have a non-circular cross-section, in which case the azimuthal inhomogeneity of the fibers is positioned in a substantially constant orientation with respect to the non-circular cross-section of the coating along the length of the fibers.

The present invention also pertains to apparatus for forming a twist-free optical fiber cable. The apparatus comprises source means for supporting at least one source of softened thermoplastic material from which at least one optical fiber can be drawn by tractor means. Coater means located between the source means and the draw means applies a coating to the fiber. The coater means has a sizing orifice at the end thereof from which the coated fiber emerges. The apparatus is characterized in that the circumference of the sizing orifice has at least one flat region, whereby the coater means applies a coating having at least one surface that is sufficiently flat that the coating cannot twist in the draw means. For example, the sizing orifice may be rectangularly-shaped, thereby providing the coating with opposed, flat surfaces.

The method and apparatus of the present invention can produce a flexible fiber optic cable comprising at least one optical fiber having an azimuthal inhomogeneity, and a non-circular coating on the fiber. The azimuthal inhomogeneity of the fiber is positioned in a substantially constant orientation with respect to the non-circular cross-section of the coating. The fiber may have a circular cross-section.

The cable may comprise a plurality of optical fibers, each having an azimuthal inhomogeneity that is oriented in a substantially constant relationship with respect to the azimuthal inhomogeneities of the remaining of the fibers.

Yet another aspect of the present invention relates to a method of making fiber optic couplers comprising PRSM optical fibers. In such couplers, each fiber has an azimuthal inhomogeneity that must be aligned with the azimuthal inhomogeneity of each remaining fiber. The coupler may be of the type wherein two or more optical fibers are fused together such that there is a common cladding region in which all cores are disposed. The coupling region of this type of coupler is characterized in that the cores are closer together and the core diameters are smaller in that region than in the remainder of the fibers. This relationship between the cores enables the coupling of optical energy between the fibers. The coupler is optionally formed with a glass tube that is fused to the fibers in the coupling region.

At least two sections of polarization retaining optical fiber are disposed in side-by-side relationship, each fiber possessing an azimuthal inhomogeneity. The azimuthal inhomogeneity of each fiber is oriented with respect to that of each remaining fiber. At least a portion of the fibers adjacent the fiber sections have a coating. At least the midregions of the fiber sections are heated and stretched to join the fibers in side-by-side fashion and to elongate the fibers, whereby the cores thereof are reduced in diameter and are brought closer together. The method is characterized in that the fiber coating is utilized to facilitate the azimuthal orientation of the fibers.

In one embodiment, each portion of optical fiber has a coating which has an azimuthal inhomogeneity that is oriented with respect to the azimuthal inhomogeneity of the fiber therein. The azimuthal inhomogeneity of each coating is aligned with respect to the azimuthal inhomogeneity of each of the remaining coatings to align the azimuthal inhomogeneities of the fibers. The step of disposing may comprise disposing the ends of the fiber portions in the end of the bore of a glass tube, the fiber sections extending through the remainder of the bore which has at least one flat wall surface. Each portion of optical fiber may have a coating which has at least one substantially flat surface. Each flat surface of a coating is situated adjacent a flat wall surface of the bore. The flat surfaces of at least two coatings could be disposed adjacent the same flat wall surface. The tube midregion is heated to collapse it onto the fibers, and at least a portion of the tube midregion is stretched or drawn.

Alternatively, all of the portions of optical fiber could be disposed in a common coating, the surface of which could be round or flattened. The azimuthal inhomogeneities of the fibers are properly aligned within the common coating. If a tube is employed with this embodiment, the bore of the tube could be round, or it could be provided with flat wall surfaces. In the latter case, the common coating could be provided with opposed flat surfaces which are situated adjacent the flat wall surfaces of the bore.

The resultant optical fiber coupler comprises at least two polarization retaining glass glass optical fibers, each having an azimuthal inhomogeneity. A section of each fiber is free from coating material. The portions of each fiber on either end of the section has coating means for orienting the azimuthal inhomogeneities of the fibers, the coating means being asymmetrical with respect to the axes of the fibers. The midregions of the fiber sections are fused in side-by-side relation to form a fused cladding in which the cores of the fibers are disposed. The midregion of the fused cladding has a central portion. The diameters of the cores of the fibers are smaller in the central portion than in the remainder of the midregion, and the cores of the fibers are more closely spaced in the central portion than in the remainder of the midregion.

In one embodiment, the coating means is characterized such that each fiber is provided with a coating having at least one flat surface, the flat surfaces of adjacent coatings being congruently disposed. Alternatively, the coating means may be characterized such that all of the fibers are disposed within a common coating and the azimuthal orientations of the fibers are properly aligned in the coating.

If a tube is employed in the coupler fabrication process, the coupler may comprise an elongated glass body having a solid midregion and first and second opposite end portions which respectively extend from the midregion to the first and second ends of the body. The central portion of the midregion has a smaller diameter than the remainder thereof. First and second longitudinal bores respectively extend from the first and second ends of the body to the midregion thereof. At least two polarization retaining glass glass optical fibers extend through the body and beyond the first and second ends thereof. Each fiber has a core and a cladding and has an azimuthal inhomogeneity. The diameters of the cores of the fibers are smaller in the central portion than in the remainder of the midregion, and the cores of the fibers are more closely spaced in the central portion than in the remainder of the midregion. The fiber claddings are fused together in the central portion to form a unitary mass. The fibers are provided with coating means for orienting the azimuthal inhomogeneities of the fibers. The coating means is disposed on those portions of the fibers that extend from the body and on those portions of the fibers extending into the ends of the bores at the first and second ends of the body. Those portions of the fibers that are disposed in the midregion have no coating. The coupler may comprise means within the bores for attaching the fibers to the ends of the glass body.

The coating means may be characterized such that each fiber is provided with a coating having at least one flat surface. The longitudinal bores may have flat wall surfaces which are disposed adjacent a flat surface of a coating.

Fig. 1 is a schematic illustration of an apparatus for drawing and coating twist-free optical fibers.

Fig. 2 is a cross-sectional view of a coater used in the apparatus of Fig. 1.

Fig. 3 is an enlarged cross-sectional view taken along lines 3-3 of Fig. 2.

Figs. 4 and 5 are cross-sectional views illustrating tractors pulling optical fibers having flat and round coatings, respectively.

Fig. 6 is a cross-sectional view of an optical fiber preform that may be utilized in the method of the present invention.

Fig. 7 is a cross-sectional view of a coated optical fiber drawn from the preform of Fig. 6.

Fig. 8 is a cross-sectional view of a stress rod PRSM optical fiber.

Fig. 9 is a schematic illustration of an apparatus for drawing and coating a plurality optical fibers.

Fig. 10 is a cross-sectional view of coated optical fibers drawn by the apparatus of Fig. 9.

Fig. 11 is a cross-sectional view of a glass tube after prepared optical fibers have been placed therein.

Fig. 12 is an enlarged cross-sectional view of one end of the tube of Fig. 11.

Fig. 13 is a partial cross-sectional view taken along lines 13-13 of Fig. 12.

Fig. 14 is a cross-sectional view illustrating the collapse of the glass tube around the fibers to form a solid midregion.

Fig. 15 is a cross-sectional view through the solid midregion of Fig. 14 along lines 15-15.

Fig. 16 is a cross-sectional illustration of the fiber coupler of the present invention after it has been drawn down and sealed at its ends.

Fig. 17 is a partial cross-sectional view showing a modified arrangement of coated fibers in a bore.

Fig. 18 is a partial cross-sectional view of an embodiment wherein two fibers are maintained in proper orientation by a single coating.

Fig. 19 is a schematic illustration of a fixture for forming a fiber optic coupler having no glass tube.

Fig. 20 is an enlarged cross-sectional view taken along lines 20-20 of Fig. 19.

Fig. 21 illustrates a cross-section of a coupler produced in the fixture of Fig. 19.

The drawings are not intended to indicate scale or relative proportions of the elements shown therein.

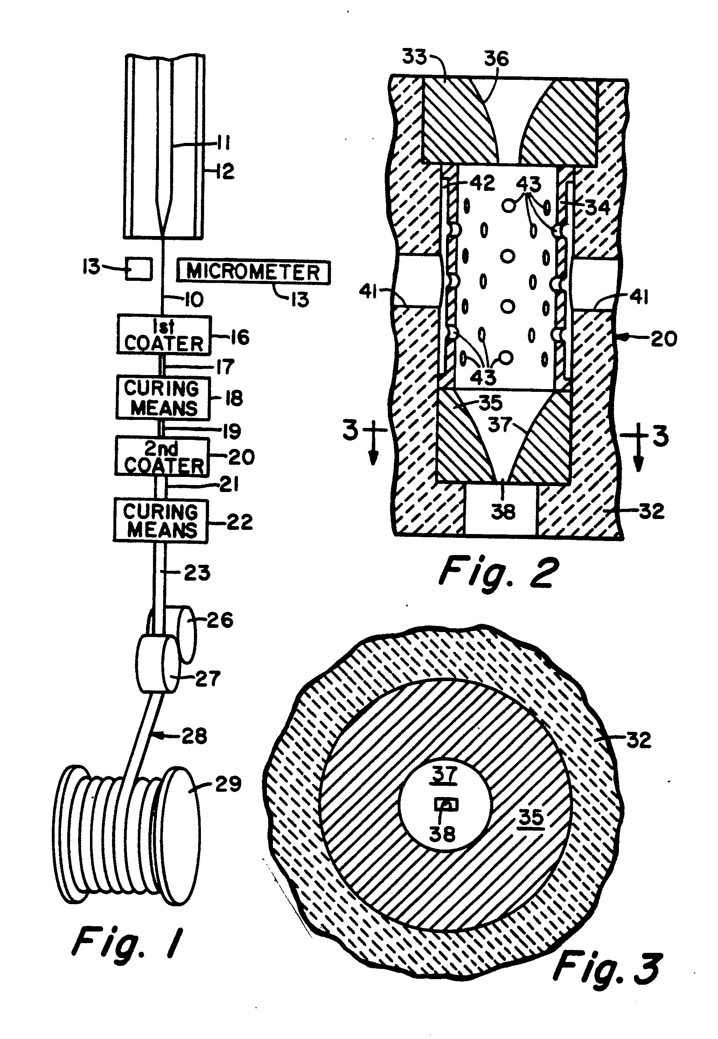

Referring to Fig. 1 there is shown an apparatus for drawing an optical fiber having substantially no rotation or twist along the longitudinal axis thereof. Fiber 10 is pulled by tractors 26 and 27 from preform 11, the tip of which is softened in furnace 12. Tractors 26,27 can be belts, capstans, pulleys or combinations thereof. The tractors must have one or more suitable contact surfaces that can engage one or more of the flat surfaces of a cable without imparting twist thereto. Conventional flat belts have been found to be satisfactory. Fiber 10 is drawn through a first coater 16 where a primary coating 17 is applied thereto. The primary coating is cured by passing it through means 18. The coated fiber is then drawn through a second coater 20 to apply over cured coating 19 a second coating 21 which is cured in means 22 to form outer coating 23. The curing means may be any suitable means for directing heat, UV light or the like onto the coated fiber, depending on the particular coating material that has been employed. After passing through tractors 26 and 27, the resultant flexible cable 28 is wound upon reel 29. Fiber diameter may be measured by any suitable means 13. A feedback signal from the diameter measurement means is conventionally used to control the speed of the tractors.

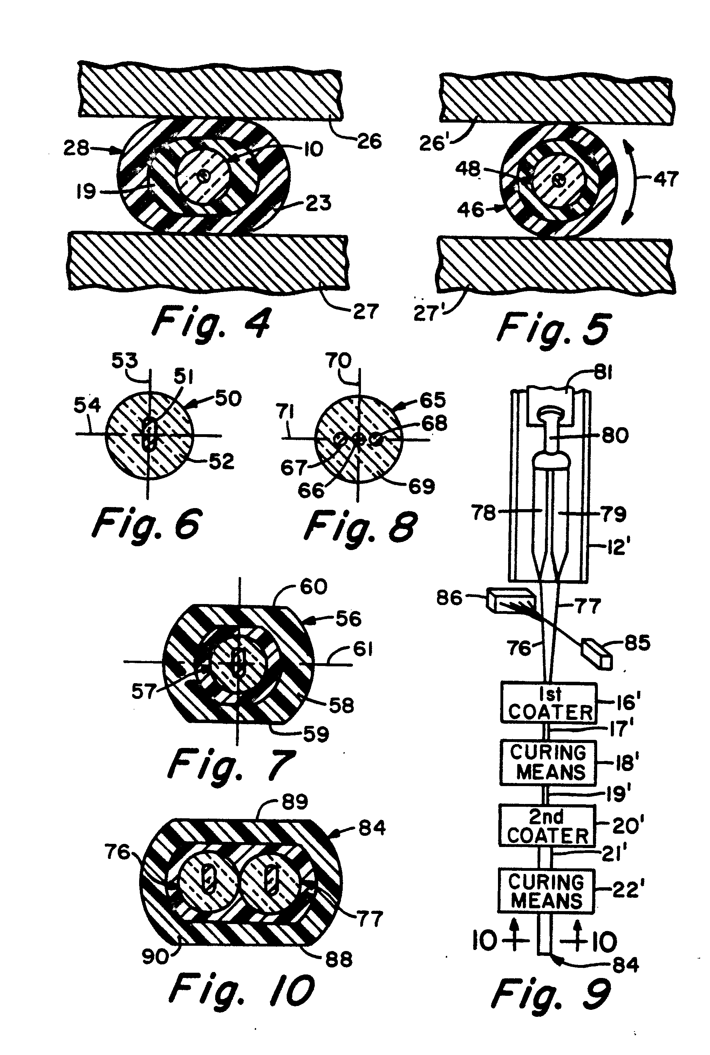

Fiber 10 can be drawn twist-free by applying thereto a coating that is sufficiently flat that cable 28 is prevented from twisting in tractors 26, 27. Coater 20, which is shown in greater detail in Fig. 2, is of the general type disclosed in U.S. patent No. 4,531,959. Situated in a vertically disposed bore in housing 32 are guide die 33, flow distribution sleeve 34 and sizing die 35. Tapered aperture 36 of guide die 33 facilitates the threading of the optical fiber into the coater. Tapered aperture 37 extends to the bottom of sizing die 35 to define a sizing orifice 38 which determines the size and shape of the applied coating. As shown in Fig. 3 orifice 38 is rectangularly shaped. During the fabrication of die 35, a conventionally shaped conical aperture was initially formed in a tungsten carbide cylinder, whereby the orifice at the small end of the taper was circular. The circular orifice was enlarged to rectangularly shaped orifice 38 by EDM machining.

Coating material flows through bores 41 into chamber 42 where it surrounds distribution sleeve 34, flows through feed holes 43 and onto the fiber being drawn through the coater..

The first coater sizing orifice need not be rectangularly shaped; it could be a conventional circularly shaped orifice, provided that the final coating is sufficiently flat to prevent cable 28 from twisting in the tractors. A flat coating could also be applied by employing a single coater or more than two coaters, depending upon the desired number of coatings. When urethane acrylate coating material is employed, it is conventional practice to apply two coatings, the second of which has a higher modulus than the first.

Fig. 4 shows that flattened coatings 19 and 23 are produced when coaters 16 and 20 have rectangularly-shaped sizing dies. As the coated fiber moves from the coater to the curing means, the uncured coating begins to flow, thereby changing the cross-sectional shape thereof from a rectangular shape to one having rounded corners as shown in Fig. 4. When conventional urethane acrylate coatings were drawn at at a sufficiently fast rate, the coatings were cured fast enough to preserve sufficiently flat opposing surfaces to prevent cable 28 from twisting in the tractors. For example, a draw speed of 4 to 5 m/sec was sufficiently fast for a spacing of about 20 cm between the coaters and the UV light curing means. Sufficiently flat coating surfaces could also be obtained by employing low viscosity coating materials such as gels or by employing extrusion coaters.

Fig. 5 illustrates the pulling of a conventional circular fiber optic cable 46 by tractors $26',27'$. Double-headed arrow 47 represents the back-and-forth twisting motion which randomly occurs during the drawing of such a cable.

The twist-free drawing of optical fibers taken in conjunction with the cross-sectional shape of the outer coating thereof renders the present method particularly useful for drawing optical fibers such as PRSM fibers which exhibit an azimuthal inhomogeneity which must be specifically oriented in the device in which the fiber is employed. Fig. 6 is a cross-sectional view of a preform from which such optical fibers can be drawn. Preform 50 comprises elliptical core 51 surrounded by cladding 52, the outer surface of which is circular in cross-section. The refractive index of core 51 is greater than that of cladding 52. Preform 50 could be formed by applying cladding glass particles to a core rod having an oblong cross-section, and thereafter consolidating the cladding glass particles. The core glass rod could be formed by any suitable process such as forming a cylinder of core glass, and removing from the cylinder two diametrically opposed longitudinally-extending surface sections by a suitable technique such as sawing, grinding or the like. U.S. patent No. 4,578,097 teaches a method of forming a glass rod of oblong cross-section and a method of overcoating such a rod with cladding glass. Examples of other azimuthally inhomogenous preforms are taught in U.S. patents Nos. 4,415,230 and 4,395,270.

In PRSM fibers of the type disclosed herein, the orientation of the azimuthal inhomogeneity can be identified by reference to a major axis located in a plane that is transverse to the fiber axis. For example, major axis 53 in the transverse plane of Fig. 6 corresponds to the major axis of elliptical core 51. Minor axis 54 is perpendicular to axis 53.

When preform 50 is mounted in draw furnace 12 of Fig. 1, cable 56 of Fig. 7 can be drawn therefrom. PRSM fiber 57 is provided with an outer coating 58 having opposed flat surfaces 59 and 60 which are parallel to the minor axis 61 of fiber 57 throughout the length thereof. Fiber 57 could be drawn with its major axis parallel to surfaces 59 and 60 by rotating preform 50 90° in the draw furnace.

Optical fibers having azimuthal inhomogeneities can also be be produced by a double crucible technique such as that taught in U.S. patent No. 4,385,916, wherein the orifice of the central crucible has an oblong shape.

Fig. 8 shows a "stress rod" PRSM optical fiber 65 of the type disclosed in U.S. patent No. 4,385,270, wherein core 66 may be circular in cross-section. Diametrically opposed, longitudinally-extending stress rods 67 and 68 have an expansion coefficient different from that of cladding 69. Such fibers can be drawn from preforms comprising a cladding glass tube in which there are placed a centrally-disposed core-containing glass rod, diametrically-opposed stress rods and cladding glass filler rods appropriately dispersed through the remaining interstices. Depending on the thermal expansion coefficient of the stress rod glass with respect to that of the cladding glass, core 66 will exhibit a greater value of refractive index along axis 70 than it does along axis 71. The major axis may be defined as that axis of the transverse plane which extends through the core in the direction of maximum refractive index, i.e. axis 70 in the above example.

A further embodiment of the invention is illustrated in Fig. 9 wherein elements similar to those of Fig. 1 are represented by primed reference numerals. Optical fibers 76 and 77 are drawn from preforms 78 and 79, respectively, the tips of which are softened in furnace 12'. Preforms 78 and 79 are fused to a common handle 80 which can be easily mounted in a vertically movable support mechanism 81. Fibers 76 and 77 are drawn through first and second coaters 16' and 20' to apply thereto primary and secondary coatings 17' and 21' as described in conjunction with Fig. 1. These coatings are cured in curing means 18' and 22', respectively. The resultant flexible cable 84, which is shown in cross-section in Fig. 10, is drawn through tractors and wound as illustrated in Fig. 1.

To measure fiber diameter in this embodiment, a beam of coherent, monochromatic light from source 85 is directed radially onto fiber 76, and the resultant forward scattered pattern of interference fringes is detected and analyzed by device 86. The diameter of fiber 77 could also be measured, and the feedback signal could comprise a composite signal that depended upon the diameters of both fibers. Alternatively, a beam of light could be directed serially across both fibers, and the resultant shadow measured by a detecting device.

In this embodiment the fiber preforms are so constructed as to produce optical fibers having an azimuthal inhomogeneity, and the preforms are aligned such that the azimuthal inhomogeneities of the two fibers are oriented in a predetermined manner. Preforms 78 and 79 may have cross-sectional configurations as illustrated in Fig. 6. Depending upon the alignment of the major axes of the preforms, cable 84 may appear as shown in Fig. 10. The minor axes of fibers 76 and 77 are parallel to flat surfaces 88 and 89 of the outer coating 90. Thus, the azimuthal inhomogeneity of each fiber is aligned with respect to the azimuthal inhomogeneity of the other fiber in the cable, and it is aligned with respect to the noncircular cross-section of the outer coating.

Whereas fibers 76 and 77 both receive a primary coating in coater 16', these fibers could pass through separate primary coaters. The resultant separately coated fibers could pass through second coater 20' where a single flat coating is applied thereto.

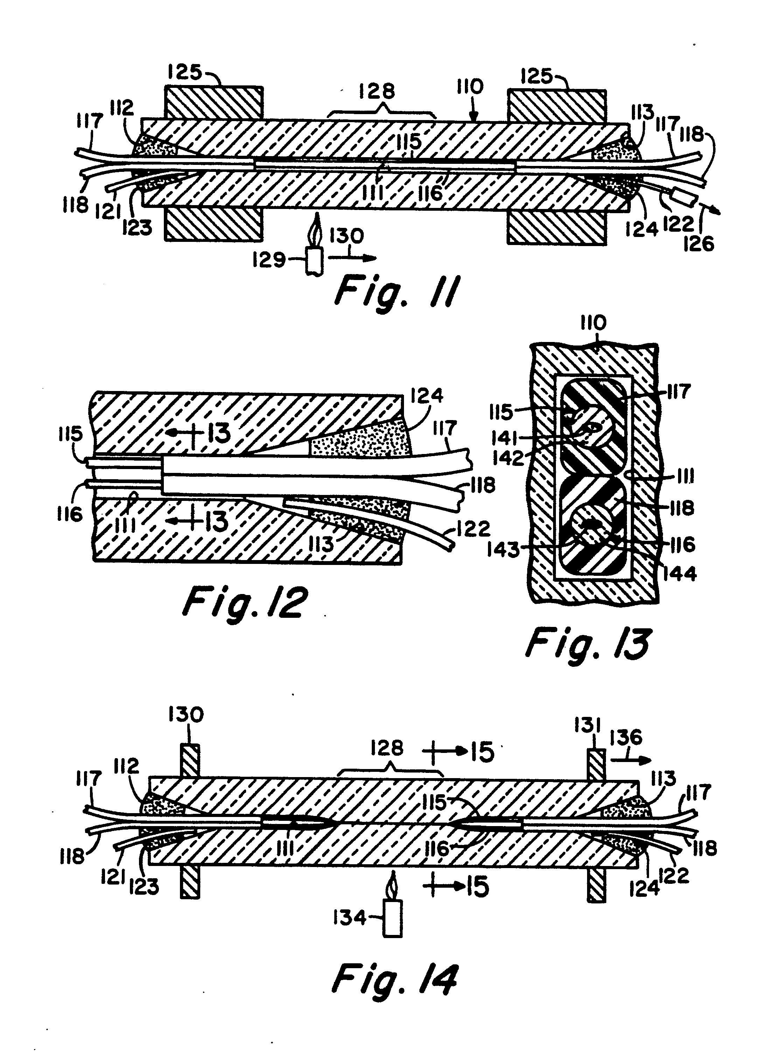

Fibers of the type shown in Fig. 7 are utilized in the formation of a fiber optic coupler by a method illustrated in Figs. 11-16.

Figs. 11, 12 and 13 show a cylindrical glass capillary tube 110 having a longitudinally extending aperture or bore 111. Bore 111 may have a rectangular cross-section as shown in Fig. 13, or its cross-sectional configuration may be square, circular or the like depending upon such factors as the cross-sectional shape of the fiber coating and whether two or more fibers are disposed in a single coating. A method of forming precision shaped bores in glass tubes is taught in U.S. patent No. 4,750,926. The bore is initially made larger than the size required for optical couplers; it is then drawn to reduce the bore diameter. Tapered apertures 112 and 113, which form funnel-like entrances to the ends of bore 111, facilitate fiber insertion. Tapered apertures can be formed by methods such as machining, particle bombardment or the like. A particularly suitable method is disclosed in U.S. patent No. 4,822,389.

The softening point temperature of tube 110 should be lower than that of the fibers that are to be inserted therein. Suitable tube compositions are

$SiO_2$ doped with 1 to 25 wt. % $B_2O_3$ and $SiO_2$ doped with 0.1 to approximately 2.5 wt. % fluorine. A preferred composition is borosilicate glass comprising $SiO_2$ doped with 8-10 wt. % $B_2O_3$. In addition to lowering the softening point temperature of $SiO_2$, $B_2O_3$ and F also advantageously decrease the refractive index thereof.

Fig. 13 shows that fibers 115 and 116, which comprise cores 141 and 143 and cladding layers 142 and 144, respectively, are provided with protective coatings 117 and 118, respectively. A portion of the coating intermediate the ends of each fiber is removed for a distance slightly shorter than the length of bore 111. The exposed fiber sections are wiped to eliminate residual material. Fibers 115 and 116 are fed through bore 111 so that a suitable length of coated fiber extends beyond each end of tube 110 for connection purposes, a length of one meter being suitable. The uncoated sections of the fibers are disposed intermediate the ends of tube 110 and are preferably centered within bore 111. The coated portions of the fibers extend a short distance into the bore to maintain proper fiber orientation. A single line represents each of the fibers 115 and 116 in Fig. 11, an enlarged view of the fibers and tube end being shown in Fig. 12.

To fabricate polarization retaining couplers, the fibers must be kept untwisted and must be maintained parallel to one another, and the major axes of the PRSM fibers must be maintained substantially parallel to one another. It is noted that this orientation includes that orientation wherein the major axes are substantially coaxial. The method of the present invention is characterized in that the fiber coating material is utilized to facilitate the alignment of the major axes of the fibers. In a first described embodiment, each fiber is provided with a rectangularly shaped coating, and the two larger flattened sides of the coating are specifically oriented with respect to the major and minor axes of the PRSM fiber therein. For example, cores 141 and 143 of optical fibers 115 and 116, respectively, of Fig. 13 are elliptically-shaped, and the minor axis of each core is parallel to the long flat sides of the rectangularly-shaped coating. Any reference herein to the shape of the coating means the cross-sectional shape thereof.

When first one coated fiber and then the second is fed through bore 111, they can only become oriented in the manner illustrated in Fig. 13, because of the cross-sectional shapes of the bore and the coatings. As shown in this figure, a flat surface of each coating lies adjacent a flat wall surface of bore 111. The dimensions of the bore are only slightly larger than the combined dimensions of the coatings to facilitate the feeding of the coated fibers through the bore. If the fit were too tight, coating material could smear on the surface of the bore and contaminate the resultant coupler. In the illustrated orientation, the major axes of fibers 115 and 116 are substantially parallel and the minor axes of the fibers are substantially coaxial. U.S. patent No. 4,753,497 teaches that the major axis of each PRSM fiber can be up to 20° out of alignment with respect to an orientation plane (the surface of the substrate in which the fiber is disposed). Apparently, such an alignment is sufficient to enable the coupling of polarized signals between the fibers of the coupler. The term "substantial alignment" is therefore used herein to mean that the major axes (and thus also the minor axes) of the PRSM fibers of the coupler are sufficiently aligned to enable the coupling of polarized signals.

Hollow glass filament 121 is inserted into tapered aperture 111, and the hollow filament along with the coated fibers are secured to the end portion of tube 110 by applying a quantity of glue 123 within and about tapered aperture 112. The process is repeated at the other end of tube 110 by inserting a second hollow glass filament 122 into tapered aperture 113 and applying a quantity of glue 124 to the filament and coated fibers within and about aperture 113. The hollow filaments extend into the tapered apertures a distance sufficient to prevent the glue from flowing onto their ends and causing blockage. Glue 123 and 124 may consist of any bonding material such as cement, adhesive or the like, UV curable epoxy being preferred. The fibers are preferably held taut during a subsequently performed tube collapse step; a slight tension is therefore applied to the coated fibers while glue 124 is setting or curing. Since the fibers are held taut, the major axes of the uncoated portions of the PRSM fibers are oriented as shown in Fig. 13 throughout the tube midregion.

The assembly so formed is placed in a suitable mounting device or holder 125, such as a tinners clamp. Hollow filament 122 may then be connected to a source of vacuum (not shown) illustrated by arrow 126. Alternatively, a tube connected to a source of vacuum may be placed around the end of capillary tube 110 so that hollow filament 122 and fibers 115 and 116 extend into the evacuated tube. The assembly comprising tube 110 and the fibers extending therethrough is optionally subjected to a final cleaning step prior to collapsing tube 110 and fusing together the stripped fiber portions. If hollow filament 121 is inserted into a liquid cleaning fluid, the fluid is drawn through longitudinal bore 111 by the vacuum applied to hollow filament 122 whereby it cleans the interior of longitudinal bore 111 and those portions of fibers 115 and 116 and hollow filaments 121 and 122 that are disposed therein. A cleaning fluid comprising a liquid cleaning solution such as a 30% ammonia solution or a gas such as air may be flowed through bore 111. If a liquid cleaning fluid is employed, midregion 128 of the assembly so formed is then heated by a suitable heat source 129 to vaporize the liquid and dry out the assembly. Heat source 129 may comprise an oxygen-hydrogen burner, a gas-oxygen burner, or the like.

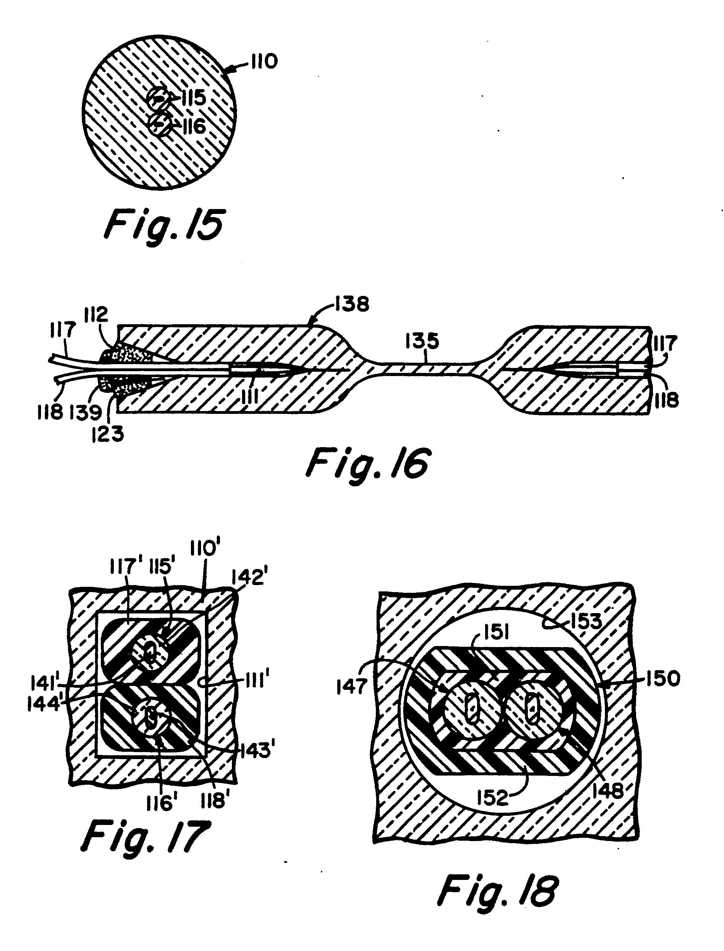

In one embodiment, tube 110 is heated and collapsed onto fibers 115 and 116 in a step that is separate from the step of stretching the midregion of tube 110. As shown in Fig. 11, the flame from burner 129 is directed onto midregion 128 to heat glass tube 110 to its softening point. Burner 129 may remain stationary, or it may traverse midregion 128 in the direction toward vacuum source 126 as shown by arrow 130. It is an optional feature of the tube collapse step to apply a vacuum source to both hollow filaments 121 and 122, in which case the direction of burner traverse is immaterial. Midregion 128 becomes a solid region that is preferably free of air lines, bubbles, or the like. Since the fiber coatings are oriented within bore 111 as shown in Fig. 13 and the fibers are held taut during the collapse step, the major axes of the PRSM fibers are substantially parallel in the collapsed midregion as shown in Fig. 15.

After midregion 128 is collapsed onto the fibers in the apparatus of Fig. 11, the assembly so formed is removed from holder 125 and placed in precision glass working lathe 130, 131 (Fig. 14). The solid midregion 128 is then subjected to the flame from burner 134 until the central portion of the midregion is heated to the softening point thereof. The flame is removed, and the softened portion of midregion 128 is pulled or drawn down by action of the glass working lathe to reduce the diameter thereof as illustrated by region 135 of Fig. 16, wherein the spacing between the fiber cores is sufficiently small to accomplish a predetermined type of coupling. In the illustrated embodiment, lathe member 130 is held stationary while lathe member 131 is traversed in the direction of arrow 136. Drawn down region 135 is obtained when tube 110 is stretched by the indicated movement of lathe member 131. In practice, such a pull down or draw down takes approximately 1/2 second. Alternative drawing techniques involve the movement of lathe members 130 and 131 in the same direction at different speeds or movement of members 130 and 131 in different directions.

The diameter of drawn down region 135 will vary as a function of various fiber and operational parameters. The ratio of the drawn down diameter of region 135 to the starting diameter of midregion 128 (the draw down ratio) is determined by the optical characteristics of the particular device being made. It is well known that such draw down ratios are a function of the ratio of the signal split between the fibers, the refractive index difference between the tube and the fiber cladding, the outside diameter of the fiber cladding, the diameter of the fiber core, signal operating wavelength, cutoff wavelength, the tolerable excess loss, and the like. A preferred range of draw down ratios is between about 1/2 to 1/20; however, couplers can be made having draw down ratios outside this range.

If the entire midregion were stretched, the end portions of the light coupling region of the fibers could be exposed to the adjacent portion of the open bore. Stretching only the central portion of the collapsed midregion ensures that the coupling region of the fibers will be embedded in the matrix glass of the capillary tube.

The assembly would not need to be rotated if the draw down portion of midregion 128 were heated by a ring burner which would uniformly heat that region around its periphery. The draw down method would otherwise be the same. In the embodiment wherein a ring burner is employed, the step of collapsing tube 110 onto fibers 115 and 116 and the step of forming drawn down region 135 may be performed on the same apparatus. If the collapse and stretch operations are performed in the same apparatus, it is preferred that tube 110 be allowed to cool prior to being reheated for the stretch step. This temporal separation of the two steps results in better process control and therefore better reproducibility. Furthermore, tube 110 can be disposed in any orientation including vertical and horizontal during the tube collapse and/or drawing operations.

After the draw down step has been performed, the exposed ends of hollow filaments 121 and 122 are removed by breaking them off at the surface of glue 123 and 124, and the open ends thereof are sealed with quantities 139 of glue. The resultant fiber optic coupler 138 (Fig. 16) functions to couple a polarized single-mode signal in optical fiber 115 to optical fiber 116 and vice versa.

In accordance with the above-described embodiment, the steps of collapsing and stretching are separately performed. Low loss couplers can also been made by an alternative embodiment wherein the steps of collapsing the tube onto the fibers and stretching the midregion are performed in a single heating operation. This alternative embodiment is disclosed in European published patent application No. 0302745. The disadvantages of this embodiment are a reduction in hermeticity and an adverse affect on manufacturing reproducibility, i.e. stretching to a predetermined length does not always result in the desired coupling characteristics.

In another alternative embodiment a hollow fiber is employed in only one end of tube 110. Such an embodiment is similar to that resulting in the formation of coupler 138 except that the internal cleansing step described will not be practical.

Aforementioned European published patent application No. 0302745 teaches a coupler forming method wherein the hollow fibers are eliminated entirely. Instead of surrounding fiber coatings 117 and 118 with glue, as described in conjunction with Fig. 11, a small amount of glue is applied to one side of the fiber coatings to attach them to one side of tapered aperture 112 while leaving an opening which permits access to bore 111 between the glue and the remainder of the tapered aperture 112. Another drop of glue is similarly applied between the fiber coatings and tapered aperture 113. Bore 111 can be evacuated by affixing a vacuum supply tube to one or both ends of capillary tube 110.

For a coupler manufacturing process to consistently produce couplers having predetermined optical characteristics, all of the process steps, including the step of inserting the fibers into the capillary tube should be uniformly performed on each coupler made. Disclosed in the aforementioned the aforementioned European published patent application No. 0302745 is a fiber insertion method which enhances process uniformity. That method employs a fiber insertion station which meets the following criterion. The mechanism which holds the fibers is aligned to facilitate the maintaining of the fibers in an untwisted and straight condition. Means is provided for holding the fibers under a slight tension during the gluing step to eliminate the occurrence of fiber slack or sag during further processing steps. That patent application also discloses an improved apparatus for performing the tube collapsing and stretching steps. The chucks are mounted on motor controlled stages, which are preferably controlled by a computer. Coupler bidirectionality is enhanced by locating the burner centrally along the coupler preform so that it heats the preform evenly.

The long sides of the rectangularly-shaped coatings of the two fibers could be in mutual contact as shown in Fig. 17 wherein elements similar to those of Fig. 13 are represented by primed reference numerals. This embodiment illustrates that the major axes of the two PRSM fibers may be substantially coaxial, if desired. This embodiment is less suitable than that of Fig. 13 since the first coated fiber to be fed through bore 111' might not initially lay flat in the illustrated position. That is, if coating 118' were oriented 90° with respect to the illustrated position, coating 117' would not fit in the bore. Thus, this embodiment requires more care in feeding the fibers into the bore. One solution to this problem is to place a very small amount of glue on the flat coating surface near one end of a coated fiber. The two coated fibers are then held together as shown in Fig. 17 with the glue therebetween. After the glue has cured, the two coated fibers are fed together through bore 111'. The step of feeding the coated fibers into bore 111' could be facilitated by employing a square bore, in which case the combined cross-sectional shape of coatings 117' and 118' would preferably be square.

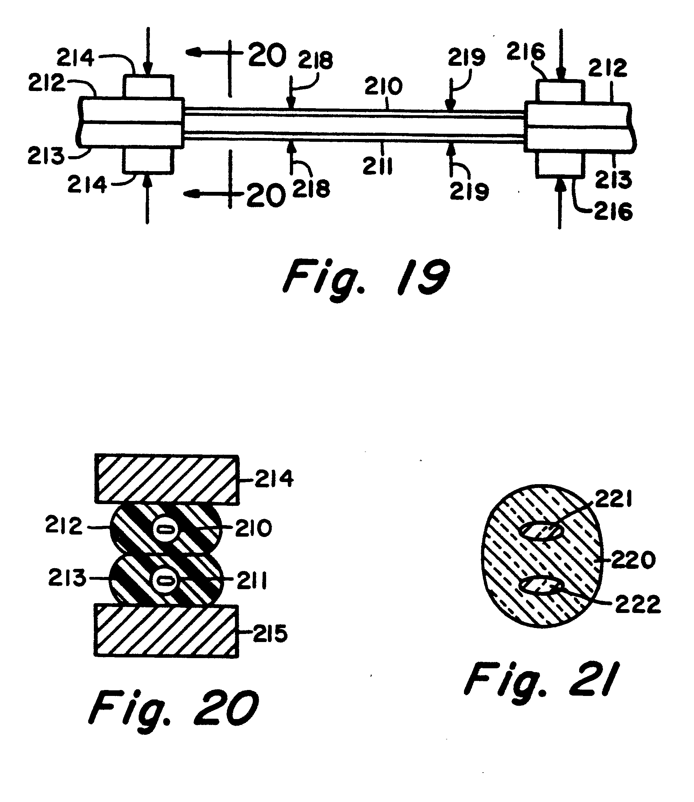

The embodiment of Fig. 18 employs a cable 150 comprising PRSM fibers 147 and 148 which are provided with common coatings 151 and 152. Since the fibers are maintained in proper orientation by the coating, the cross-sectional shape of the tube bore is not as important in this embodiment. Circular bore 153, for example, could be employed. Also, the coating could have a different cross-sectional shape such as circular. The steps of fiber insertion and gluing to the tube ends would be similar to those described above. A mechanical stripper sometimes failed to remove all of the coating material from the region between fibers. A solvent stripping technique is preferred.

To connect system fibers to the coupler fibers, a section of coating is stripped from the end of the multi-fiber cable extending from the coupler. After each coupler fiber is joined to its respective system fiber, the individual lengths of fiber are recoated.

Two PRSM fibers could be provided with a coating having a circular cross-sectional shape by employing coaters having circular sizing dies. When a round coating is formed, a precision tractor system should be used to minimize twisting of the coating in the tractors, thus ensuring that the major and minor axes of the PRSM fibers are properly oriented.

The fiber orienting technique of the present invention can also be employed in the fabrication of biconically tapered fiber optic couplers of the type disclosed in U.S. patent No. 4,755,037, which do not employ a tube. Fig. 19 shows a fixture for clamping coatings 212 and 213 of two PRSM fibers 210 and 211, respectively. As shown in Fig. 20, the major axes of fibers 210 and 211 are parallel when the flat sides of coatings 212 and 213 are adjacent one another. Two spaced regions of the fibers are secured by clamps 214 and 216 in such a manner that there are no twists in the fibers between clamps. The clamps must be spaced a sufficient distance to enable fibers 210 and 211 to be fused together and stretched to form an adequately long coupling region. After the coatings have been removed from those sections of the fibers between the clamps, the fibers are brought together at the two locations indicated by arrows 218 and 219. A length of the contacting fibers is fused together and stretched as taught in U.S. patent No. 4,755,037. During the fusion step, the molten fiber cladding flows and forms a common fused cladding 220, thereby allowing cores 220 and 221 to move closer together as shown in Fig. 21.


Example 1

A fiber optic coupler was made in accordance with the following specific example.

A preform of the type illustrated in Fig. 6 was placed in a draw furnace. The elliptical core region consisted of $SiO_2$ doped with 30 wt. % $GeO_2$ and the cladding was pure $SiO_2$. A PRSM optical fiber having a diameter of 80 μm was drawn and coated by an apparatus of the type shown in Fig. 1, the coaters being of the type shown in Figs. 2 and 3. The draw tractors were the belt-capstan wheel type disclosed in U.S. patent No. 4,755,021. A 14 cm length of coated fiber was gripped between a capstan wheel and a 2.5 cm wide rubber belt which was driven by a capstan motor spindle and spaced by two idler rolls. Fiber diameter was measured by an Anritsu fiber measurement system which provided a signal to the tractors to control the speed thereof. The fiber core size was 2 μm by 5.5 μm. The first coater had a round sizing die having a diameter of 0.114 mm (0.0045 inch). The second coater had a rectangular sizing die, the dimensions of which were 0.127 mm (0.005 inch) by 0.201 mm (0.0094 inch). The first coater was supplied with Desoto brand low modulus urethane acrylate primary coating material, and the second coater was supplied with Desoto brand high modulus urethane acrylate secondary coating material. The coating material was supplied to both coaters at room temperature. Ultra violet light curing means 18 and 22 were located 6 cm from coaters 16 and 20, respectively. Fiber draw rate was 6 m/sec. The resultant cable, which was similar to those shown in Fig. 7, had a maximum thickness of about 190 μm and a minimum thickness of about 130 μm. Opposed surfaces 59 and 60 were observed to be relatively flat. The resultant coated fiber was cut into lengths of approximately 2 m. Every inspection revealed that the minor axis of the PRSM fiber was parallel to the flat surfaces of the cable. A commercially available mechanical stripper was used to remove the resin coating from approximately 3.8 cm (1 1/2 inches) of the central portions of two lengths of coated fiber.

To form a glass capillary tube, glass particulate material was applied to a cylindrical mandrel, consolidated, drawn, and dried in accordance with the teachings of U.S. Patents Numbers Re. 28,029, 3,884,550, 4,125,388 and 4,286,978. More specifically, particulate material composed of borosilicate glass containing 8 wt % $B_2O_3$ was deposited on a mandrel to form a porous, cylindrically-shaped preform. The mandrel was removed and the porous preform was consolidated to form a tubular glass body. A rectangular bore was formed in accordance with the teachings of U.S. patent No. 4,750,926. The method disclosed in that patent teaches shrinking the tube onto a carbon mandrel of desired cross-section and then burning out the mandrel. The resultant tubular article was redrawn to reduce the cross-sectional dimensions of the bore to about 400 μm by about 145 μm. The resultant precision capillary tube was severed into individual tubes 110 each having an outside diameter of about 2.8 mm and a length of 5.1 cm. At the ends of the longitudinal bore were formed tapered apertures 112 and 113, which extended about 2 μm into the bore.

The uncoated portions of the fibers were wiped with a lintless cloth to remove residual matter, and the fibers were pulled through longitudinal bore 111 of capillary tube 110 formed as described above. The uncoated portions of the fibers were approximately centered within the bore. A hollow glass fiber 122 having an outside diameter of approximately 125 μm was inserted approximately 0.3 to 0.6 cm (1/8 to 1/4 inch) into tapered aperture 113. A quantity of Norland UV curable glue was disposed within the tapered aperture about the fibers and filament and cured by exposure to UV light for about 1 minute. In this manner the optical fibers and filament 122 were rigidly affixed to the end of tube 110. A second hollow fiber 121 was inserted approximately 0.3 to 0.6 cm (1/8 to 1/4 inch) into the other tapered aperture 112. A slight tension was applied to the two fibers and a drop of UV curable glue was applied and cured as described above. The assembly so formed was mounted in a tinner's clamp that was modified by cutting away the central portion and one end portion of the clamping region such that when the coupler assembly was mounted, midregion 128 and one tube end surface was exposed. A tube connected to a vacuum source was connected to one end of the capillary tube such that the optical fibers and hollow filament were disposed inside the evacuated tube. In this manner, bore 111 was evacuated through hollow filament 122. Hollow filament 121 was inserted into a beaker of 30% ammonia solution. The ammonia solution was sucked into bore 111 whereby the bore and the outside surfaces of the optical fibers were cleansed for approximately 10 seconds. Hollow filament 121 was then removed from the beaker of cleansing solution. After as much of the liquid as possible was removed from bore 111 by the vacuum source, a burner was directed at tube 110 for about 20 seconds to assist in drying out the interior thereof.

The midregion 128 of tube 110 was then heated to the softening point of the borosilicate glass by an oxygen-hydrogen burner whereupon the glass collapsed around the optical fibers within the longitudinal aperture. The flame was then traversed through the midregion in the direction of the vacuum source so that as the material of the tube collapsed about the optical fibers, residual matter within the bore 111 was sucked out by the vacuum.

The assembly so formed was then removed from the modified tinner's clamp and placed in a Heathway precision glass working lathe having a computer controlled drawn down mechanism. The flame from an oxygen-hydrogen gas burner was then applied to a small portion of the solid midregion until the softening point of the materials was reached, whereupon the computer controlled pull down apparatus stretched the heated section for an interval of approximately 0.5 second. The diameter of the pulled down section was approximately 0.7mm.

Thereafter, hollow filaments 121 and 122 were broken off, and UV curable glue was applied to the ends of the device to cover the resultant holes. Signal losses measured on the coupler so formed were typically in the 0.05 to 0.7 dB range at 1300 $\mu$m wavelength. This produced a 50:50 signal split in the fibers having a 1200 $\mu$m cutoff wavelength. Couplers having extinction ratios greater than 19 dB have been fabricated.

## Example 2

Apparatus similar to that described in Example 1 was employed for drawing a cable of the type shown in Fig. 10. The details of this method are the same as those described in Example 1 unless otherwise stated. Two preforms 78 and 79 of the type shown in Fig. 6 were fused to a glass handle 80 which was mounted in the vertically movable support mechanism of the furnace. The major axes of the core regions were parallel to one another. The diameter measuring system was oriented such that the axis of a beam of light from the source was located in the plane in which the axes of both fibers were disposed. The light beam was directed across both fibers, and the shadow activated the detector. Fibers 76 and 77 were drawn through first and second coaters to apply thereto primary and secondary coatings as described in Example 1. The first coater had a rectangular sizing die, the dimensions of which were 0.23 mm (0.009 inch) by 0.51 mm (0.02 inch). The second coater had a rectangular sizing die, the dimensions of which were 0.46 mm (0.018 inch) by 1.02 mm (0.04 inch).

The resultant flexible cable was similar to that shown in cross-section in Fig. 10. The cable was severed at various locations along its length in order to ascertain the orientations of the fiber cores. Every inspection revealed that the minor axes of the PRSM fibers were parallel to the flat surfaces of the cable.

## Example 3

An experiment was performed to determine the relative orientation of two PRSM fibers in the collapsed midregion of a capillary tube when the orienting feature is the incorporation of the fibers in a cable of the type shown in Fig. 10. Two fibers were drawn and coated in accordance with Example 2. The resultant flexible cable, which was similar to that shown in cross-section in Fig. 10, had a maximum thickness of 375 $\mu$m and a minimum thickness of 325 $\mu$m. The cable was severed into 2 meter lengths. A 2 m length of the two fiber cable was pulled taut and the ends thereof were taped to a table. A small brush about 3.8 cm wide was dipped into a container of methylene chloride and then placed on the central region of the cable to expose a 3.8 cm long section of the cable to the solvent. After the coating had been exposed to the solvent for about 4 minutes, the cable was wiped with a cloth to remove the softened coating.

A precision capillary tube was formed by drawing down a tubular borosilicate glass structure until the circular bore had an inside diameter of 450 $\mu$m. The outside diameter was 2.8 mm. Coupler tubes having tapered apertures were severed from the precision capillary tube.

The cable was pulled through a coupler tube bore so that the uncoated portions of the fibers were approximately centered within the bore, and a slight tension was applied to the two fibers. Hollow glass fibers were inserted into the tapered apertures at both ends of the tube and glue was disposed within the apertures and was cured. The assembly so formed was mounted in a tinner's clamp. A tube connected to a vacuum source was affixed to one end of the capillary tube such that the optical fibers and hollow filament were disposed inside the evacuated tube. Those elements within the tube bore were cleaned in 30% ammonia solution and then dried.

The tube midregion was heated to the softening point of the borosilicate glass by an oxygen-hydrogen burner, thereby causing the glass to collapse around the optical fibers within the longitudinal aperture. The flame traversed through the midregion in the direction of the vacuum source.

The assembly so formed was then removed from the modified tinner's clamp and placed in a Heathway precision glass working lathe having a computer controlled drawn down mechanism. The flame from an oxygen-hydrogen gas burner was applied to a small portion of the solid midregion until the softening point of the materials was reached, whereupon the computer controlled pull down apparatus stretched the heated section for an interval of approximately 0.5 second. The diameter of the pulled down section was approximately 0.7 mm. Analysis of the cross-section of the sample revealed that the cores of the fibers were aligned as illustrated in Fig. 15.

## Claims

1. A method of forming an optical fiber cable that is substantially twist-free along the length thereof comprising the steps of
providing at least one source of softened thermoplastic material from which at least one optical fiber can be drawn,
pulling at least one optical fiber from said at least one source by passing said at least one optical fiber through a draw mechanism having opposed, moving surfaces, and
applying to said at least one fiber, between said at least one source and said draw mechanism, a coating having at least one surface that is sufficiently flat that said coating cannot twist in said draw mechanism.

2. A method in accordance with claim 1 wherein the step of applying comprises applying to said at least one fiber a coating having two opposed flat surfaces.

3. A method in accordance with claim 1 wherein the step of applying comprises applying to said at least one fiber a plurality of coatings.

4. A method in accordance with claim 1 wherein the step of applying comprises applying to said at least one fiber a plurality of coatings, the first applied coating being round.

5. A method in accordance with claim 1 wherein the step of pulling comprises pulling a plurality of fibers from a plurality of sources.

6. A method in accordance with claim 1 wherein the step of providing comprises providing at least one source of softened thermoplastic material from which there can be drawn at least one polarization retaining single-mode fiber having an azimuthal inhomogeneity, the azimuthal inhomogeneity of said at least one fiber in said coating being oriented in a substantially constant relationship with respect to said at least one flat surface of said coating.

7. A method in accordance with claim 1 wherein the step of providing comprises providing a plurality of sources of softened thermoplastic material from which there can be drawn a plurality of polarization retaining single-mode fibers, each having an azimuthal inhomogeneity, and wherein the step of pulling comprises pulling a plurality of polarization retaining single-mode fibers, each having an azimuthal inhomogeneity, the azimuthal inhomogeneity of each fiber in said coating being oriented in a substantially constant relationship with respect to the azimuthal inhomogeneities of the remaining fibers in said coating.

8. A method of drawing an optical fiber comprising the steps of
drawing at least one optical fiber having an azimuthal inhomogeneity, and
applying to said at least one fiber, during the drawing thereof, a coating having a non-circular cross-section, the azimuthal inhomogeneity of said at least one fiber being positioned in a substantially constant orientation with respect to the non-circular cross-section of said coating.

9. A method in accordance with claim 8 wherein the step of drawing at least one optical fiber comprises drawing at least one optical fiber having a circular cross-section.

10. A method in accordance with claim 8 wherein the step of drawing at least one optical fiber comprises drawing a plurality of optical fibers.

11. A method in accordance with claim 10 wherein the step of applying comprises applying a coating to said plurality of fibers, the azimuthal inhomogeneity of each fiber in said coating being oriented in a substantially constant relationship with respect to the the azimuthal inhomogeneities of the remaining fibers therein.

12. A method in accordance with claim 8 wherein the step of drawing comprises supporting in a predetermined orientation at least one optical fiber preform which has an azimuthal inhomogeneity, and drawing from said at least one preform at least one optical fiber having an azimuthal inhomogeneity.

13. A method of drawing optical fibers comprising the steps of
simultaneously drawing a plurality of optical fibers, each having an azimuthal inhomogeneity, and
applying to said plurality of fibers during the drawing thereof a coating, the azimuthal inhomogeneity of each fiber in said coating being oriented in a substantially constant relationship with respect to the the azimuthal inhomogeneities of the remaining fibers therein.

14. A method in accordance with claim 13 wherein the step of simultaneously drawing comprises supporting in a predetermined orientation a plurality of optical fiber preforms, each having an azimuthal inhomogeneity, and drawing from said preforms a plurality of optical fibers, each having an azimuthal inhomogeneity.

15. A method in accordance with claim 13 wherein the step of applying comprises applying to said plurality of fibers a coating having a non-circular cross-section, the azimuthal inhomogeneity of said fibers being positioned in a substantially constant orientation with respect to the non-circular cross-section of said coating along the length of said fibers.

16. Apparatus for forming an optical fiber cable that is substantially twist-free along the length thereof comprising

source means for supporting at least one source of softened thermoplastic material from which at least one optical fiber can be drawn,

tractor means for pulling at least one optical fiber from said at least one source, and

coater means between said source means and said draw means for applying a coating to said at least one fiber, said coater means having a sizing orifice at the end thereof from which the coated fiber emerges,

wherein the circumference of said sizing orifice has at least one flat region, whereby said coater means applies a coating having at least one surface that is sufficiently flat that said coating cannot twist in said draw means.

17. Apparatus in accordance with claim 16 wherein said sizing orifice is rectangularly-shaped.

18. A flexible fiber optic cable comprising at least one optical fiber having an azimuthal inhomogeneity, and

a coating applied to said at least one fiber, said coating having a non-circular cross-section, the azimuthal inhomogeneity of said at least one fiber being positioned in a substantially constant orientation with respect to the non-circular cross-section of said coating.

19. A flexible fiber optic cable in accordance with claim 18 wherein the outer surface of said at least one fiber has a circular cross-section.

20. A flexible fiber optic cable in accordance with claim 18 wherein said at least one optical fiber comprises a plurality of optical fibers, each having an azimuthal inhomogeneity, the azimuthal inhomogeneity of each of said fibers being oriented in a substantially constant relationship with respect to the azimuthal inhomogeneities of the remaining of said fibers.

21. A flexible fiber optic cable comprising a plurality of optical fibers, each having an azimuthal inhomogeneity, and

a coating on said fibers, the azimuthal inhomogeneity of each of said fibers being oriented in a substantially constant relationship with respect to the azimuthal inhomogeneities of the remaining of said fibers throughout the length of said cable.

22. A flexible fiber optic cable in accordance with claim 21 wherein said plurality of optical fibers have circular cross-sections.

23. A method of making a fiber coupler comprising the steps of:

disposing in side-by-side relationship at least two sections of polarization retaining optical fiber, each of which possesses an azimuthal inhomogeneity, the azimuthal inhomogeneities of said fibers being oriented with respect to each other, at least a portion of said fibers adjacent said sections having a coating, and

heating and stretching at least the midregion of said at least two sections of said fibers to join said fibers in side-by-side fashion and to elongate said fibers, whereby the cores thereof are reduced in diameter and are brought closer together to effect the coupling of optical energy between said fibers, said method being characterized in that said fiber coating is utilized to facilitate the step of azimuthally orienting said fibers.

24. A method in accordance with claim 23 wherein each said portion of optical fiber has a coating which has an azimuthal inhomogeneity that is oriented with respect to the azimuthal inhomogeneity of the fiber therein, the azimuthal inhomogeneity of each coating being aligned with respect to the azimuthal inhomogeneity of each of the remaining coatings to align the azimuthal inhomogeneities of said fibers.

25. A method in accordance with claim 24 wherein each said portion of optical fiber has a coating which has at least one substantially flat surface; wherein the step of disposing comprises disposing the ends of said fiber portions in the end of the bore of a glass tube, said fiber sections extending through the remainder of said bore, said bore having at least one flat wall surface, each flat surface of a coating being situated adjacent a flat wall surface of said bore, and wherein the step of heating and stretching comprises heating the midregion of said tube to collapse said midregion on said fibers and drawing at least a portion of the midregion of said tube.

26. A method in accordance with claim 25 wherein the flat surfaces of at least two coatings are disposed adjacent to a single flat wall surface of said bore.

27. A method in accordance with claim 23 wherein all of said portions of optical fiber are disposed in a common coating, the azimuthal inhomogeneities of said fibers being properly aligned within said common coating.

28. A method in accordance with claim 23 wherein the step of disposing comprises disposing said fiber sections in the bore of a glass tube, and wherein the step of heating and stretching comprises heating the midregion of said tube to collapse said midregion on said fibers and drawing at least a portion of the midregion of said tube.

29. A method in accordance with claim 28 wherein all of said portions of optical fiber are disposed in a common coating, the azimuthal inhomogeneities of said fibers being properly aligned within said common coating, and wherein the bore of said tube is round.

30. A method in accordance with claim 28 wherein the bore of said tube has opposed flat wall surfaces and wherein all of said portions of optical fiber are disposed in a common coating having opposed flat surfaces, the azimuthal inhomogeneities of said fibers being properly aligned within said common coating, the opposed flat surfaces of said coating being situated adjacent the flat wall surfaces of said bore.

31. A method of making a fiber coupler comprising the steps of:
disposing within the longitudinal bore of a glass tube at least two polarization retaining optical fibers, each of which possesses an azimuthal inhomogeneity, said fibers extending beyond at least one end of said tube, at least those portions of said fibers that extend from said tube having a coating, the azimuthal inhomogeneities of said fibers being oriented with respect to each other,
holding said fibers taut to effect a tension therein, heating the central portion of said tube to collapse said midregion around said fibers, and
drawing at least a portion of said midregion to reduce the diameter thereof, whereby the cores of said fibers are reduced in diameter and are brought closer together,
said method being characterized in that said fiber coating material is utilized to facilitate the step of azimuthally orienting said fibers.

32. A method in accordance with claim 31 wherein each said portion of optical fiber has a coating which has an azimuthal inhomogeneity that is oriented with respect to the azimuthal inhomogeneity of the fiber therein, the azimuthal inhomogeneities of said coatings being aligned to align the azimuthal inhomogeneities of said fibers.

33. A method in accordance with claim 31 wherein each said portion of optical fiber has a coating which has at least one substantially flat surface, and wherein said bore has at least one flat wall surface, each flat surface of a coating being situated adjacent a flat wall surface of said bore.

34. A method in accordance with claim 33 wherein the flat surfaces of at least two coatings are disposed adjacent to the a single flat wall surface of said bore.

35. A method in accordance with claim 31 wherein all of said portions of optical fiber are disposed in a common coating, the azimuthal inhomogeneities of said fibers being properly aligned within said common coating.

36. A method in accordance with claim 31 wherein the bore of said tube has opposed flat wall surfaces and wherein all of said portions of optical fiber are disposed in a common coating having opposed flat surfaces, the azimuthal inhomogeneities of said fibers being properly aligned within said common coating, the opposed flat surfaces of said coating being situated adjacent the flat wall surfaces of said bore.

37. A method of making a fiber coupler comprising the steps of:
providing a glass tube having a longitudinal bore, at least one wall surface of which is flat,
inserting into said bore at least two polarization retaining optical fibers, each of which possesses an azimuthal inhomogeneity, those portions of said fibers that extend from said tube having a coating having at least one flat surface that is specifically oriented with respect to the azimuthal inhomogeneity of the fiber therein, said coatings extending a short distance into the end of said bore so that a flat surface of each coating lies adjacent a flat wall surface of said bore, thereby orienting the azimuthal inhomogeneities of said fibers with respect to each other, the remainder of the lengths of said fibers within said bore, the lengths of which are slightly shorter than the length of said bore, being free from coating material,
holding said fibers taut to effect a tension therein, heating the central portion of said tube to collapse said midregion around said fibers, and
drawing at least a portion of said midregion to reduce the diameter thereof, whereby the cores of said fibers are reduced in diameter and are brought closer together.

38. An optical fiber coupler comprising at least two polarization retaining glass glass optical fibers, each having an azimuthal inhomogeneity, a section of each fiber being free from coating material, the portions of each fiber on either end of said section having coating means for orienting the azimuthal inhomogeneities of said fibers, the midregions of said fiber sections being fused in side-by-side relation to form a fused cladding in which the cores of the fibers are disposed, the midregion of the fused cladding having a central portion, the diameters of the cores of said fibers being smaller in said central portion than in the remainder of said midregion, the cores of said fibers being more closely spaced in said central portion than in the remainder of said midregion.

39. An optical fiber coupler in accordance with claim 38 wherein said coating means is characterized such that each fiber is provided with a coating having opposed, flat surfaces, the flat surfaces of adjacent coatings being congruently disposed.

40. An optical fiber coupler in accordance with claim 38 wherein said coating means is characterized such that all of said fibers are disposed within a common coating and the azimuthal orientations of said fibers are properly aligned in said coating.

41. An optical fiber coupler comprising an elongated glass body having a solid midregion and first and second opposite end portions which respectively extend from said midregion to the first and second ends of said body, the central portion of said midregion having a smaller diameter than the remainder thereof,

first and second longitudinal bores respectively extending from said first and second ends of said body to the midregion thereof,

at least two polarization retaining glass glass optical fibers extending through said body and beyond the first and second ends thereof, each said fiber having a core and a cladding and having an azimuthal inhomogeneity, the diameters of the cores of said fibers being smaller in said central portion than in the remainder of said midregion, the cores of said fibers being more closely spaced in said central portion than in the remainder of said midregion, and said fiber claddings being fused together in a unitary mass in said central portion,

coating means for orienting the azimuthal inhomogeneities of said fibers, said coating means being disposed on those portions of said fibers that extend from said body and on those portions of said fibers extending into the ends of said bores at the first and second ends of said body, those portions of said fibers that are disposed in said midregion having no coating, said coating means being asymmetrical with respect to the axes of said fibers.

42. An optical fiber coupler in accordance with claim 41 further comprising means within said bores for attaching said fibers to the ends of said glass body.

43. An optical fiber coupler in accordance with claim 41 wherein said coating means is characterized such that each fiber is provided with a coating having opposed, flat surfaces, and said longitudinal bores have rectangular cross-sectional shapes.

44. An optical fiber coupler in accordance with claim 43 wherein a flat surface of each coating is disposed adjacent a single flat wall surface of each of said bores.

45. An optical fiber coupler in accordance with claim 41 wherein said coating means is characterized such that all of said fibers are disposed within a common coating and the azimuthal orientations of said fibers are properly aligned in said coating.

46. An optical fiber coupler in accordance with claim 45 wherein said bores have rectangular cross-sectional shapes and wherein said coating has opposed, flat surfaces.

EP 0 402 010 A2

Fig. 1

Fig. 2

Fig. 3

Fig. 4

Fig. 5

Fig. 6

Fig. 8

Fig. 7

Fig. 10

1st COATER

CURING MEANS

2nd COATER

CURING MEANS

Fig. 9

Fig. 11

Fig. 12

Fig. 13

Fig. 14

Fig. 15

Fig. 16

Fig. 17

Fig. 18

Fig. 19

Fig. 20

Fig. 21